# EUROPÄISCHE PATENTSCHRIFT

(11) **EP 1 587 726 B1**
(45) Veröffentlichungstag und Bekanntmachung des Hinweises auf die Patenterteilung: **30.08.2006**
(21) Anmeldenummer: 03795954.1
(22) Anmeldetag: 23.12.2003
(51) Int. Cl.: B62D 25/10, B60R 21/34, B60S 1/04

(54) **FRONTHAUBE FüR EIN KRAFTFAHRZEUG**
BONNET FOR A MOTOR VEHICLE
CAPOT AVANT DE VEHICULE

(30) Priorität: 01.02.2003 DE 10303994
(43) Veröffentlichungstag der Anmeldung: 26.10.2005
(73) Patentinhaber: DaimlerChrysler AG, 70567 Stuttgart (DE)
(72) Erfinder: KERNER, Wolfgang, 72184 Eutingen (DE); VISEL, Kai, 70569 Stuttgart (DE)
(86) Internationale Anmeldenummer: PCT/EP2003/014773
(87) Internationale Veröffentlichungsnummer: WO 2004/067359

(56) Entgegenhaltungen:
- EP-A- 0 301 494
- EP-A- 1 093 980
- EP-A- 1 155 931
- DE-A- 3 820 644
- FR-A- 2 771 980

## Beschreibung

Die Erfindung betrifft eine Fronthaube für ein Kraftfahrzeug.

Aus der DE 36 06 810 A1 ist eine Fronthaube bekannt, die beabstandet von einer Windschutzscheibe angeordnet ist. In einer Nichtgebrauchsstellung ist ein Wischerarm zwischen der Windschutzscheibe und der Fronthaube angeordnet, um eine aus aerodynamischen und aus Gründen des Fußgängerschutzes gewünschte abgedeckte Wischerarmablage zu ermöglichen.

Aufgrund eines bestehenden Trends, Fronthauben von Kraftfahrzeugen wegen möglicher Kollisionen mit Fußgängern sicherer zu gestalten, werden Fronthauben bevorzugt nachgiebig ausgeführt. Eine Möglichkeit zur Erhöhung des Fußgängerschutzes ist es, den Abstand zwischen der Fronthaube und unter der Fronthaube angeordneten Teilen zu vergrößern, so dass die Fronthaube bei einem Aufprall einen größeren Deformationsweg zurücklegen kann, bis sie auf einen Widerstand stößt.

Des weiteren ist eine für den Fußgänger modifizierte Fronthaube aus der gattungsbildenden EP 1 093 980 A1 bekannt. Diese Fronthaube mit einem Ober- und einem Unterblech weist zum Schutz von Fußgängern in der Mitte eine geringe Nachgiebigkeit auf. Zu den Rändern nimmt die Nachgiebigkeit stetig zu. Das gewünschte Nachgiebigkeitsprofil der Fronthaube wird durch Sicken im Unterblech oder durch Verstärkungsbleche hervorgerufen und führt bei einem Kopfaufprall eines Fußgängers an einer beliebigen Stelle der Fronthaube zu einem im wesentlichen gleichmäßigen Deformationsverhalten. Hierdurch wird die Verletzungsgefahr für den Fußgänger verringert und somit der Fußgängerschutz erhöht.

Der vorliegenden Erfindung liegt die Aufgabe zugrunde, eine Fronthaube für ein Kraftfahrzeug der eingangs genannten Art zu schaffen, welche den Fußgängerschutz erhöht.

Diese Aufgabe wird durch eine Fronthaube mit den Merkmalen des Patentanspruchs 1 gelöst.

Die erfindungsgemäße Fronthaube zeichnet sich durch einen nachgiebigen Deformationsbereich aus, welcher zumindest teilweise oberhalb eines Bewegungsbereichs eines Wischerarms angeordnet ist. Der Deformationsbereich besteht aus einem mit der Fronthaube verbundenen Deformationselement. Wenn im Zusammenhang mit der Erfindung von Bewegungsbereich eines Wischerarms die Rede ist, so ist damit ein überstrichener Drehwinkel eines Wischerarms gemeint, der im Überdekkungsbereich mit der Fronthaube liegt. Im Falle einer Kollision mit einem Fußgänger, leitet der Fußgänger durch den Aufprall eine Kraft in die erfindungsgemäße Fronthaube ein, so dass sie deformiert wird. Sobald die Fronthaube mit unmittelbar unter ihr angeordneten Teilen, wie beispielsweise einem Wischerarm, in Kontakt tritt, wird die Fronthaube, da sie in diesen Bereichen eine besonders große Nachgiebigkeit aufweist, weiter deformiert und der Deformationsweg der Fronthaube wird länger. Der Aufprall des Fußgängers wird dadurch gedämpft und die Verletzungsgefahr verringert.

Vorteilhafte Ausgestaltungen sind den Unteransprüchen zu entnehmen.

Gemäß einer Ausführungsform erstreckt sich der Deformationsbereich der Fronthaube im wesentlichen über die gesamte Breite der Fronthaube. Dies hat den Vorteil, dass die Anordnung des Deformationsbereichs unabhängig von der Anordnung des Wischerarms erfolgt. Des weiteren ist ein sich über die gesamte Fronthaube erstreckender Deformationsbereich symmetrisch. Dadurch fügt er sich optisch harmonisch in die Fronthaube ein.

Die Fronthaube weist gemäß einer weiteren Ausführungsform zwei Deformationsbereiche auf. Die beiden Deformationsbereiche sind ausschließlich oberhalb des Bewegungsbereichs der Wischerarme angeordnet, ohne dabei die Steifigkeit der restlichen Fronthaube zu beeinflussen.

Erfindungemäß besteht der Deformationsbereich aus einem mit einem Ober- und einem Unterblech der Fronthaube verbundenen Deformationselement. Es ist auch denkbar, das Deformationselement mit dem Oberblech und einem Querträger der Fronthaube zu verbinden. Durch ein separates Deformationselement wird es möglich, den Deformationsbereich aus einem anderen Material als die übrige Fronthaube herzustellen. Über das Material lassen sich auf besonders einfache Weise die gewünschten Eigenschaften des Deformationsbereichs einstellen, wie beispielsweise die Nachgiebigkeit. Ein denkbares Material ist Kunststoff. Des weiteren können die Deformationselemente entweder in der Farbe der Fronthaube oder zur Hervorhebung der Funktionalität in einer Kontrastfarbe lackiert sein. Bei Deformationselementen aus Kunststoff können Anbauelemente, wie beispielsweise Scheibenspritzdüsen, bei der Herstellung besonders einfach in die Deformationselemente integriert werden, weil die Deformationselemente mittels Spritzgussverfahren hergestellt werden und dazu lediglich die Spritzgussformen angepasst werden müssen.

Es ist auch denkbar, anstelle eines separaten Elements für den Deformationsbereich, die Fronthaube einstückig auszuführen und die Deformationsbereiche besonders nachgiebig zu gestalten. Die Nachgiebigkeit der Deformationsbereiche kann beispielsweise durch Materialschwächungen, wie Sollbruch- bzw. Sollknickstellen erzeugt werden.

Um die Deformationselemente auf einfache Art und Weise mit dem Ober- und dem Unterblech der Fronthaube verbinden zu können, weisen die Bleche gemäß einer weiteren Ausführungsform an ihrer der Windschutzscheibe zugewandten Seite einen Flansch auf. Das Deformationselement besitzt eine dem Flansch entsprechende Aufnahme. Um die Montage weiter zu vereinfachen, können zusätzliche Befestigungsmittel, wie beispielsweise handelsübliche Blechklammern verwendet werden.

Gemäß einer weiteren Ausführungsform ist das Deformationselement mittels einer Schnappverbindung mit dem Ober- und dem Unterblech verbunden. Bei dieser Art der Befestigung sind außer dem Flansch, welcher an der windschutzscheibeseitigen Seite der Bleche angeordnet ist, keine weiteren Befestigungsmittel notwendig. Dadurch kann das Deformationselement einfach und schnell montiert werden, wodurch bei der Montage Zeit gespart wird und somit Kosten reduziert werden.

Gemäß einer weiteren Ausführungsform der Erfindung ist die Kontur des Deformationselements an die Konturen des Ober- und Unterblechs angepasst. Das Deformationselement berührt die Bleche entlang seines der Bleche zugewandten Umfangs. Zudem schließt die Oberfläche des Deformationselements mit der Oberfläche des Oberblechs nach außen bündig ab, so dass die Fronthaube eine glatte Oberseite aufweist. Eine derartige Fronthaube hat den Vorteil, dass bei einem Fußgängeraufprall keine Verletzungen durch hervorstehende Kanten hervorgerufen werden.

Im folgenden wird die erfindungsgemäße Fronthaube anhand der in der Zeichnung dargestellten Ausführungsbeispiele näher erläutert. Es zeigen:
- Fig. 1: eine schematische Draufsicht auf ein Kraftfahrzeug mit einer erfindungsgemäßen Fronthaube;
- Fig. 2: eine schematische Draufsicht auf ein Kraftfahrzeug mit einem weiteren Ausführungsbeispiel der erfindungsgemäßen Fronthaube;
- Fig. 3: einen Schnitt entlang der Schnittlinie III-III gemäß Fig. 1 sowie
Fig. 4a,b,c Detailansichten der Verbindung zwischen Deformationselement und Oberblech sowie Querträger.

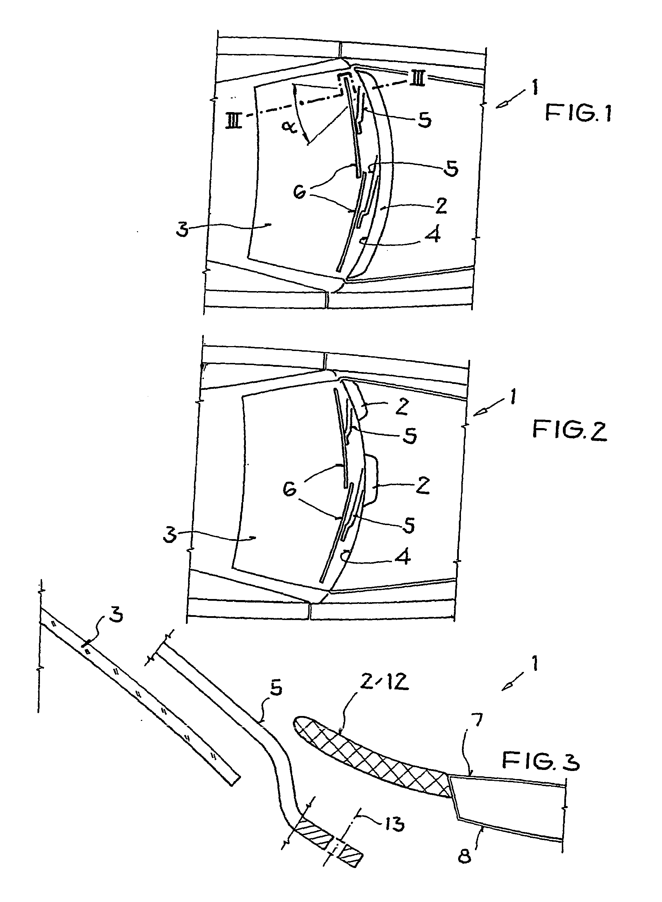

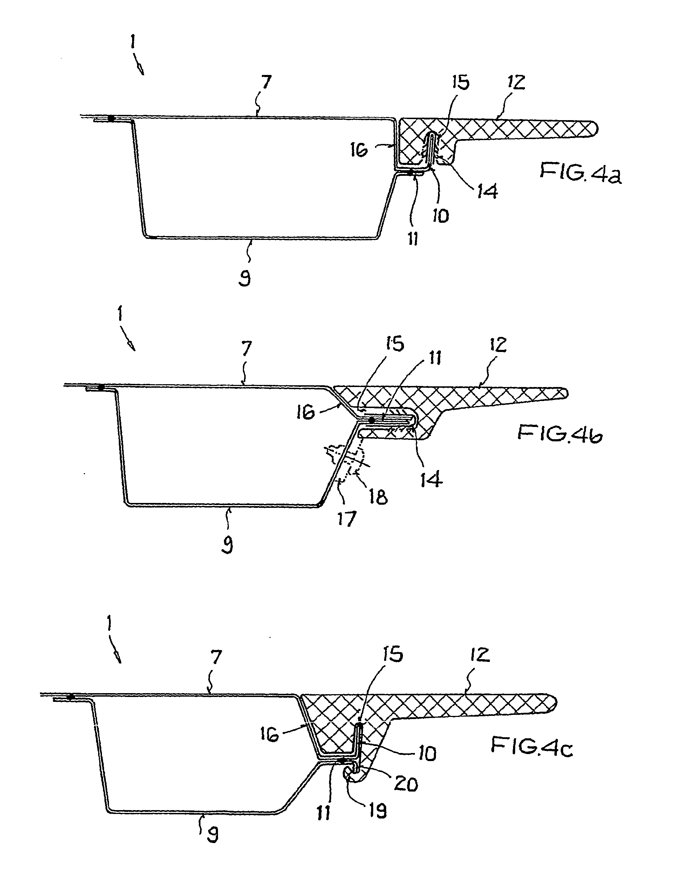

In Fig. 1 ist ein Frontbereich eines Kraftfahrzeugs mit einer Fronthaube 1, einer Windschutzscheibe 3 und einer Wischeranordnung dargestellt. Die Fronthaube 1 weist einen Deformationsbereich 2 auf. Dieser Deformationsbereich 2 ist an einer der Windschutzscheibe 3 zugewandten Außenkante 4 der Fronthaube 1 angeordnet und erstreckt sich im wesentlichen über die gesamte Breite des Kraftfahrzeugs. Die Wischeranordnung weist zwei Wischerarme 5 mit Wischerblättern 6 auf. Die Fronthaube 1 ist beabstandet von der Windschutzscheibe 3 angeordnet (vgl. Fig. 3). Die Wischerarme 5 überstreichen einen Drehwinkel α. Die unteren Enden der Wischerarme 5 werden von der Fronthaube 1 verdeckt.

Aus Fig. 2 geht ein weiteres Ausführungsbeispiel der Fronthaube 1 hervor. Im Unterschied zu dem in Fig. 1 dargestellten Ausführungsbeispiel, sind an der der Windschutzscheibe 3 zugewandten Außenkante 4 der Fronthaube 1 zwei Deformationsbereiche 2 angeordnet. Die Deformationsbereiche 2 sind zumindest im Überdeckungsbereich der Fronthaube 1 mit einem Bewegungsbereich der Wischerarme 5 angeordnet. Mit anderen Worten, die Deformationsbereiche 2 befinden sich oberhalb der unteren Enden der Wischerarme 5.

In Fig. 3 ist die Fronthaube 1 mit einem Oberblech 7, einem Unterblech 8 und einem Deformationsbereich 2 dargestellt. Das Oberblech 7 ist nach außen gerichtet und stellt die Außenhaut der Fronthaube 1 dar. Das Unterblech 8 ist einem Innenraum, in der Regel Motorraum, zugewandt. Die beiden Bleche 7, 8 sind im wesentlichen parallel zueinander ausgerichtet. Der Deformationsbereich 2 besteht aus einem Deformationselement 12, welches mit den Blechen 7, 8 verbunden ist und eine Verlängerung des Oberblechs 7 in Richtung der Windschutzscheibe 3 bildet. Die Windschutzscheibe 3 ist von der Fronthaube 1 beabstandet angeordnet und erstreckt sich zum Teil mit ihrem unteren, der Fronthaube 1 zugewandten Ende unter das Deformationselement 12 der Fronthaube 1. Der Wischerarm 5 ist zwischen der Fronthaube 1 und der Windschutzscheibe 3 angeordnet. Er weist an seinem unteren Ende, welches von der Fronthaube 1 verdeckt wird, eine Bohrung 13 auf, die zur Befestigung des Wischerarms 5 an einer Karosserie des Kraftfahrzeugs dient.

In den Fig. 4a, b, c sind drei verschiedene Ausführungsformen der Verbindung zwischen dem Oberblech 7 und einem (Hauben-)Querträger 9 mit dem Deformationselement 12 in Detailansichten dargestellt.

Die in Fig. 4a dargestellte Fronthaube 1 weist ein Oberblech 7, einen Querträger 9 und ein Deformationselement 12 auf. Der Querträger 9 ist durch Punktschweißen mit dem Oberblech 7 verbunden. Das Oberblech 7 und der Querträger 9 bilden an einer dem Deformationselement 12 zugewandten Seite einen L-förmigen Flansch 11, wobei ein Schenkel 10 des L-förmigen Flansches 11 nur aus dem Oberblech 7 gebildet ist. Das Deformationselement 12 weist eine schlitzförmige Aufnahme 15 für den Schenkel 10 auf. Das Deformationselement 12 wird mit Hilfe einer handelsüblichen Blechklammer 14 mit dem Flansch 11 verbunden. Das Deformationselement 12 füllt einen wannenförmigen Raum zwischen dem Flansch 11 und einem Abschnitt 16, welcher zwischen dem nach außen gerichteten Oberblech 7 und dem Flansch 11 liegt, nahezu vollständig aus. Das Deformationselement 12 und das nach außen gerichtete Oberblech 7 schließen an einer die Oberfläche der Fronthaube 1 bildenden Seite bündig ab. Die Fronthaube 1 weist dadurch eine glatte Oberseite auf. Aneinandergrenzende Flächen des Abschnitts 16 des Oberblechs 7 und des Deformationselements 12 sind parallel zueinander ausgerichtet.

In Fig. 4b ist der Flansch 11 parallel zum Oberblech 7 in Richtung der Windschutzscheibe 3 ausgerichtet. Er wird aus dem Oberblech 7 und dem Querträger 9 gebildet. Das Deformationselement 12 weist eine schlitzförmige Aufnahme 15 für den Flansch 11 auf. Wie in Fig. 4a werden der Flansch 11 und das Deformationselement 12 über eine handelsübliche Blechklammer 14 miteinander verbunden. Das Oberblech 7 ist im Abschnitt 16 in Richtung Windschutzscheibe 3 abgeschrägt und wird von dem Deformationselement 12 teilweise überdeckt. Die aneinandergrenzenden Flächen des Abschnitts 16 des Oberblechs 7 und des Deformationselements 12 sind parallel zueinander ausgerichtet. Optional weist das Deformationselement 12 einen Befestigungsabschnitt 17 auf, der sich entlang des Querträgers 9 erstreckt und mit diesem zusätzlich über ein Befestigungselement, wie beispielsweise eine Niet 18, verbunden ist.

In Fig. 4c ist ein drittes Ausführungsbeispiel der Verbindung zwischen der Fronthaube 1 und dem Deformationselement 12 dargestellt. Das Oberblech 7 und der Querträger 9 bilden einen T-förmigen Flansch 11, wobei das Oberblech 7 den rechtwinklig nach oben abgewinkelten Schenkel 10 des Flansches 11 darstellt und der Querträger 9 einen rechtwinklig nach unten abgewinkelten Schenkel 20 des Flansches 11 darstellt. Der nach unten abgewinkelte Schenkel 20 ist kürzer als der nach oben abgewinkelte Schenkel 10. Das Deformationselement 12 weist eine T-förmige Aufnahme 15 sowohl für den nach oben abgewinkelten Schenkel 10 als auch für den nach unten abgewinkelten Schenkel 20 auf. An der T-förmigen Aufnahme 15 des Deformationselements 12 befindet sich eine U-förmige Raste 19, die bei der Montage des Deformationselements 12 über den nach unten abgewinkelten Schenkel 20 schnappt und so eine formschlüssige Verbindung zwischen dem Flansch 11 und dem Deformationselement 12 herstellt. Wie in Fig. 4a und 4b, sind die aneinandergrenzenden Flächen des Abschnitts 16 des Oberblechs 7 und des Deformationselements 12 parallel zueinander ausgerichtet.

Bei allen drei Ausführungsbeispielen der Fig. 4a, b und c ist es denkbar, zusätzlich das Unterblech 8 zur Bildung des Flansches 11 zu verwenden. Es ist auch denkbar, den Flansch 11 nur aus dem Oberblech 7 und dem Unterblech 8 zu bilden. Des weiteren schließt bei allen Ausführungsbeispielen die nach außen gerichtete Oberfläche des Oberblechs 7 mit der nach außen gerichteten Oberfläche des Deformationselements 12 bündig ab, so dass die Fronthaube 1 insgesamt eine glatte Außenseite aufweist.

## Patentansprüche

1. Fronthaube (1) für ein Kraftfahrzeug mit
- einem Oberblech (7), welches nach außen gerichtet ist, und
- einem Unterblech (9), welches einem Innenraum zugewandt ist,
- wobei die Fronthaube (1) im Bereich einer einer Windschutzscheibe zugeordneten Außenkante mindestens einen Deformationsbereich (2) mit einer Nachgiebigkeit aufweist, die größer ist als die Nachgiebigkeit der übrigen Fronthaube (1), **dadurch gekennzeichnet, dass** der Deformationsbereich (2) zumindest im Überdeckungsbereich der Fronthaube (1) mit einem Bewegungsbereich eines Wischerarms (5) angeordnet ist,
und
dass
der Deformationsbereich (2) aus einem mit der Fronthaube (1) verbundenen Deformationselement (12) besteht.

2. Fronthaube nach Anspruch 1,
**dadurch gekennzeichnet,**
**dass** sich der Deformationsbereich (2) im wesentlichen über die gesamte Breite der Fronthaube (1) erstreckt.

3. Fronthaube nach Anspruch 1,
**dadurch gekennzeichnet,**
**dass** die Fronthaube (1) im Bereich der der Windschutzscheibe (3) zugeordneten Außenkante (4) zwei Deformationsbereiche (2) aufweist.

4. Fronthaube nach einem der Ansprüche 1 bis 3,
**dadurch gekennzeichnet,**
**dass** die Fronthaube (1) an der der Windschutzscheibe (3) zugewandten Außenkante (4) einen Befestigungsflansch (11) aufweist.

5. Fronthaube nach Anspruch 4,
**dadurch gekennzeichnet,**
**dass** das Deformationselement (12) eine Aufnahme (15) für den Befestigungsflansch (11) aufweist.

6. Fronthaube nach Anspruch 5,
**dadurch gekennzeichnet,**
**dass** das Deformationselement (12) mittels eines in die Aufnahme (15) eingebrachten Befestigungselements (14) mit der Fronthaube (1) verbunden ist.

7. Fronthaube nach Anspruch 5,
**dadurch gekennzeichnet,**
**dass** das Deformationselement (12) mittels einer Schnappverbindung mit der Fronthaube (1) verbunden ist.

8. Fronthaube nach Anspruch einem der Ansprüche 1 bis 7,
**dadurch gekennzeichnet,**
**dass** die Konturen des Deformationselements (12) und die Konturen des Oberblechs (7) aneinander angepasst sind.

## Claims

1. Bonnet (1) for a motor vehicle, having
- an upper sheet (7) which is directed outward, and
- a lower sheet (9), which faces an interior,
- the bonnet (1) having, in the region of an outer edge assigned to a windscreen, at least one deformation region (2) with an elasticity which is greater than the elasticity of the remainder of the bonnet,
**characterized in that** the deformation region (2) is arranged at least in the region in which the bonnet (1) overlaps with a region of movement of a wiper arm (5) and **in that** the deformation region (2) comprises a deformation element (12) connected to the bonnet (1).

2. Bonnet according to Claim 1, **characterized in that** the deformation region (2) extends essentially over the entire width of the bonnet (1).

3. Bonnet according to Claim 1, **characterized in that** the bonnet (1) has two deformation regions (2) in the region of the outer edge (4) assigned to the windscreen (3) .

4. Bonnet according to one of Claims 1 to 3, **characterized in that** the bonnet (1) has a fastening flange (11) on the outer edge (4) facing the windscreen (3).

5. Bonnet according to Claim 4, **characterized in that** the deformation element (12) has a receptacle (15) for the fastening flange (11).

6. Bonnet according to Claim 5, **characterized in that** the deformation element (12) is connected to the bonnet (1) by means of a fastening element (14) placed into the receptacle (15).

7. Bonnet according to Claim 5, **characterized in that** the deformation element (12) is connected to the bonnet (1) by means of a snap connection.

8. Bonnet according to Claims 1 to 7, **characterized in that** the contours of the deformation element (12) and the contours of the upper sheet (7) are matched to one another.

## Revendications

1. Capot avant (1) pour un véhicule automobile, comprenant :
- une tôle supérieure (7) qui est orientée vers l'extérieur et
- une tôle inférieure (9) qui est tournée vers un espace intérieur,
- le capot avant (1) présentant, dans la région d'un bord extérieur associé à un pare-brise, au moins une zone de déformation (2) ayant une certaine élasticité, qui est supérieure à l'élasticité du reste du capot avant (1), **caractérisé en ce que** la zone de déformation (2) est disposée au moins dans la région de recouvrement du capot avant (1) avec une région de déplacement d'un bras d'essuie-glace (5), et **en ce que** la zone de déformation (2) se compose d'un élément de déformation (12) connecté au capot avant (1).

2. Capot avant selon la revendication 1,
**caractérisé en ce que**
la zone de déformation (2) s'étend essentiellement sur toute la largeur du capot avant (1).

3. Capot avant selon la revendication 1,
**caractérisé en ce que**
le capot avant (1) présente, dans la région du bord extérieur (4) tourné vers le pare-brise (3), deux zones de déformation (2).

4. Capot avant selon l'une quelconque des revendications 1 à 3,
**caractérisé en ce que**
le capot avant (1) présente, sur le bord extérieur (4) tourné vers le pare-brise (3), une bride de fixation (11).

5. Capot avant selon la revendication 4,
**caractérisé en ce que**
l'élément de déformation (12) présente un logement (15) pour la bride de fixation (11).

6. Capot avant selon la revendication 5,
**caractérisé en ce que**
l'élément de déformation (12) est connecté au capot avant (1) au moyen d'un élément de fixation (14) monté dans le logement (15).

7. Capot avant selon la revendication 5,
**caractérisé en ce que**
l'élément de déformation (12) est connecté au capot avant (1) au moyen d'une connexion par encliquetage.

8. Capot avant selon l'une quelconque des revendications 1 à 7,
**caractérisé en ce que**
les contours de l'élément de déformation (12) et les contours de la tôle supérieure (7) sont adaptés les uns aux autres.
